# EUROPEAN PATENT APPLICATION

(11) **EP 4 461 704 A1**
(43) Date of publication of application: **13.11.2024**
(21) Application number: 23172803.1
(22) Date of filing: 11.05.2023
(51) Int. Cl.: C01C 1/26, C01D 7/18, B01D 61/44

(54) **PROCESS FOR PRODUCING AMMONIUM CARBONATE AND SODIUM CARBONATE**

(71) Applicant: Solvay SA, 1120 Brussels (BE)
(72) Inventor: ASENSIO, Salvador, 39300 Barreda-Torrelavega (Cantabria) (ES); DAVOINE, Perrine, 1120 Brussels (BE)
(74) Representative: Kraus & Lederer PartGmbB

(57) **Abstract**

Process for producing (NH₄)₂CO₃ and Na₂CO₃ in an electrodialyzer cellstack by feeding a base chamber of the electrodialyzer cellstack with an aqueous solution comprising NH₄Cl, NaCl, dissolved CO₂ and obtaining an outlet solution from the base chamber comprising (NH₄)₂CO₃ and Na₂CO₃, and wherein the pH of the outlet solution from the base chamber is at most 9.5.

## Description

The present invention relates to a process for producing (NH₄)₂CO₃ and Na₂CO₃ from an aqueous solution comprising ammonium chloride, sodium chloride, and dissolved CO₂ using an electrodialyzer cellstack.

### Technical field

The major industrial process for the production of synthetic sodium carbonate is the soda ash process, also known as SOLVAY process (ammonia-soda process) or, in a modified embodiment as HOU process. This process consists in treating an ammoniacal brine with gas containing carbon dioxide. From the solution sodium bicarbonate precipitates, is recovered and calcined to obtain sodium carbonate. The mother liquid obtained from the sodium bicarbonate separation contains ammonium chloride and sodium chloride. The mother liquid is then reacted either with calcium oxide or with calcium hydroxide to obtain ammonia, which is recycled back to the initial brine solution in the ammonia-soda process or treated to precipitate solid NH₄Cl in the HOU process. More details of the process for producing sodium carbonate according to the ammonia-soda ash process, and of the production of refined bicarbonate, is described in Ullmann's Encyclopedia of Industrial Chemistry ("Sodium carbonate" chapter, Vol. 33, pages 299-317, 2012 edition, Wiley-VCH Verlag GmbH & Co, in particular at paragraphs 1.4.1 and 1.4.2.

The known soda ash process has proved to consume large amounts of energy among others for the recycling of the ammonia. Furthermore, there is still a need for improvement of the recycling of ammonia and the reduction of undesired byproducts of the process. The electrolysis of ammonium chloride for the recovery or production of chlorine or ammonia or both is disclosed in US 2,209,681. In this method an electrolyzing current is passed through an electrolytic cell having an aqueous electrolyte containing ammonium and sodium chloride, the concentration of the sodium chloride being at least equal to that of the ammonium chloride. This process presents several disadvantages and is not used.

A process for obtaining chemicals from the waste process water of the soda ash process, and in particular, from the mother liquid obtained after sodium bicarbonate filtration and containing ammonium chloride and sodium chloride, is described in Austrian Patent No. AT 96/01330. In this process the sodium and ammonium ions are separated from the chloride ions, and the ions so separated, together with the relevant counter-ions of the water dissociation are converted into sodium hydroxide, ammonium hydroxide, ammonia and hydrochloric acid, respectfully. The separation of the sodium and ammonium ions from the chloride ions is conducted by electrodialysis. The electrodialysis is conducted using at least three chambers (see Fig. 2 of the above reference) that are separated from each other by one monopolar anionic selective membrane and one monopolar cationic selective membrane, themselves being separated by one bipolar membrane from the respective next section. An alternative embodiment of this disclosure (see Fig. 3 of the above reference) uses only two chambers that are separated alternatively with a bipolar membrane and a cationic selective membrane to obtain one flow containing: hydrochloric acid, sodium chloride and ammonium chloride, and a second flow containing ammonium hydroxide and sodium hydroxide. In the above disclosure, the solution entering the base chamber is deprived of carbon dioxide.

Electrodialysis technologies are well known and are mainly used for electro-separation processes, such as the production of drinkable water, sea water desalination, brackish desalination water, industrial waste water treatments, acid or alkali recovery in metal plating industries, food and pharmaceuticals processes. Electrodialysis principles are well described for instance in Ullmann's Encyclopedia of Industrial Chemistry (2011 edition, Wendt, -VCH Verlag GmbH & Co, Vol. 12 pp 273-313, Electrochemistry), or in Technique de l'Ingénieur Encyclopedia 2006 edition, (Chapter Electrodialyse, J2840 V1, 2006, pp 1-15 and Technical appendixes pp 1-3).

WO2016/055367 in the name of SOLVAY describes a process for producing ammonia from a solution comprising ammonium chloride (NH₄Cl) fed in at least one base chamber of an electrodialyzer cellstack, said base chamber being maintained at a pH of at least 10, preferably maintained in the range between 10.3 to 12.0. Example in this disclosure shows the possibility to convert at least 98.5% of ammonium chloride (NH₄Cl) into ammonia (NH₄OH); as in the same conditions maintaining the base chamber at pH 9.8 the conversion of ammonium chloride to ammonia decreases to 86.5%.

Though when operating the above process, at above pH conditions, ammonium ions (NH₄⁺) leaks from the base chamber to the acid chamber through the selective membranes, generating then acid solutions comprising ammonium ions that are detrimental for specific uses when the said acid solution is valorized as acid, or when it is discharged in the environment after neutralization. Indeed ammonia is toxic to most aquatic species, and is difficult and it is costly, when present at low concentration, to strip it with steam, or to oxidize by photo-catalytic techniques, or to treat by biological treatment that are expensive.

### Brief description of the invention

The present inventors found that ammonia leak through electrodialyzer membranes of a base chamber fed with an aqueous solution comprising NH₄Cl, NaCl, and dissolved CO₂, is strongly reduced or eliminated by maintaining the pH in the base chamber to less than 9.5.

In particular, the presence of dissolved CO₂ may be provided by carbonating with a CO₂ containing gas at least part of the NH₄Cl and NaCl solution upstream the base chamber, so that the resulting solution comprises NH₄Cl, NaCl, and dissolved CO₂ before feeding the aqueous solution in the base chamber.

Consequently, the present invention relates to a process for producing (NH₄)₂CO₃ and Na₂CO₃ in an electrodialyzer cellstack by feeding a base chamber of the electrodialyzer cellstack with an aqueous solution comprising NH₄Cl, NaCl, dissolved CO₂ and obtaining an outlet solution from the base chamber comprising (NH₄)₂CO₃ and Na₂CO₃, and wherein the pH of the outlet solution from the base chamber is at most 9.5.

The invention relates also to a process for producing sodium carbonate by a soda ash process, comprising the step of producing (NH₄)₂CO₃ and Na₂CO₃, using the above process,

Electrodialysis is a technique that consists in combining, within a set of adjoining chambers, bipolar ion-exchange membranes with anionic and/or cationic ion-exchange membranes. The anionic membranes are ion-exchange membranes that are permeable to anions and, ideally, impermeable to cations. The cationic membranes are themselves permeable to cations and impermeable to anions. A bipolar membrane is an ion-exchange membrane comprising a cationic face and an anionic face. Such membranes may be produced by joining a cationic membrane and an anionic membrane. The bipolar membrane may for example be produced by the process described in WO 01/79335 in the name of SOLVAY.

Within the bipolar membrane, under the action of a sufficient local electric field, the dissociation of the water that has diffused therein, to its H⁺ and OH⁻ions takes places which ions then migrate on both sides of this membrane. There is therefore acidification in one of the chambers adjacent to the bipolar membrane and alkalinization in the other adjacent chamber. Successive bipolar membranes are separated by cationic or anionic monopolar membranes. When the electrodialyzer only possesses bipolar membranes and one type of monopolar membranes (cationic or anionic), they are said to have two (types of) chambers. The electrodialyzer used in the process of the present invention possesses preferably only bipolar and anionic membranes.

The chamber located between the anionic face of the bipolar membrane and an anionic membrane constitutes a base chamber. In this chamber there is a supply of OH⁻ ions originating from the bipolar membrane. In the process of the present invention, the base chamber is fed with the aqueous solution comprising ammonium chloride, sodium chloride and dissolved CO₂. The OH⁻ ions supplied from the bipolar membrane will react with the ammonium cations to yield the desired ammonia and water.

In the present invention the dissolved CO₂ in the solution comprising NH₄Cl and NaCl fed in the base chamber, at pH of at most 9.5 are generally present as bicarbonate ions (HCO₃⁻) and carbonate ions (CO₃²⁻). Counter ions of the bicarbonate ions being the cation present in the aqueous solution such as ammonium (NH₄+), sodium (Na⁺), and in less extent hydronium ions (H₃O⁺).

A first advantage of the present invention is the reduced amount of ammonium ions loss through the membranes of the base chamber(s) dialyzer cellstack.

A second advantage of the present invention linked to the first advantage, is the limited amount of ammonium ions transferred into adjacent acidic chamber(s) that eases the valorization of the produced acid solutions with a reduced amount of ammonium impurities in it.

A third advantage of the present invention is to ease the use of the acid produced in the electrodialyzer cellstack, to reduce the cost of treatment of the acids solutions after their use to remove ammonia, and also reduce the environmental impact towards fish and aquatic flora, when releasing the used acids in rivers and sea after said appropriate treatment, as ammonia is detrimental for such living species in nature.

A fourth advantage of the present invention is to increase the sustainability of processes for producing sodium carbonate according to the ammonia-soda ash process, by reducing the CO₂ emissions from fossil fuels. Indeed, the present invention enables to replace, partly or totally, the use of lime (CaO) to regenerate the ammonium chloride (NH₄Cl) into alkaline ammonia (in present invention as (NH₄)₂CO₃), by an electrodialysis process that can use `green electricity' (ie. produced from solar, wind, geothermal, biogas, and low impact hydroelectric sources). Note: lime (CaO) in conventional soda ash process is manufactured mainly in limekilns wherein calcium carbonate (limestone) is calcined by using fossil carbon sources such as coke.

A fifth advantage of the present invention, which is an advantageous embodiment, no limekiln is used for the production of the ammonium carbonate or the sodium carbonate in the present process. This enables to avoid such equipment operating at high temperature that is costly to build, and to decrease the associated maintenance costs.

A sixth advantage of the present invention is to decrease solid effluents from the ammonia distillation, as when using lime, or milk of lime, in distillation sectors, part of unreacted lime or limestone remain in the solid effluents. In comparison, when replacing a thermal calcination of limestone with an electrical generation of alkaline and acid solutions, a limestone attack with an acid solution enables to generate the needed carbon dioxide, with minimal unreacted limestone in the final solid effluent.

A seventh advantage of the present invention is also to increase the yield in the ammonia-soda process of the sodium use of sodium chloride (NaCl) from 60 to 70% to figures of more than 90% or 95%. Indeed the use of anionic membranes in the present process enables to migrate chlorides from NH4Cl and NaCl into acidic solution (ie solutions comprising HCl) while keeping the sodium ions in the base chamber and to recycle part of the outlet solution into a soda ash process. Therefore, the process of present invention enables to improve the circularity of the use of raw material such as sodium chloride or limestone to produce sodium carbonate.

### Definitions

In the present specification, the term "ammonia-soda ash process" refers to the processes described in the above technical field as the first or second variant of the SOLVAY process, for producing sodium carbonate (soda-ash) by an ammonia process.

In the present specification, the term 'electrodialysis' refers to an electrochemical process which enables to at least partially or totally extract salt ions from one solution through an ion-exchange membrane subjected to an electric field to another solution.

In the present specification, the term `electrodialyzer cellstack' refers to an equipment wherein an electrodialysis process may be performed. It generally comprises several cells delimited by ion exchange membranes (also called ion perm-selective membranes).

The term "comprising" includes "consisting essentially of" and also "consisting of".

In the present specification, the terms "%", "% by weight", "wt%", "wt. %", "weight percentage", or "percentage by weight" can be used interchangeably, unless the "%" term is explicitly referred to an other physical unit (such as for instance "% in mole", or mol. %", "% in volume" or "vol. %", etc....

If the term "about" is used before a quantitative value, this corresponds to a variation of ± 10% of the nominal quantitative value, unless otherwise indicated.

### Brief description of the figure

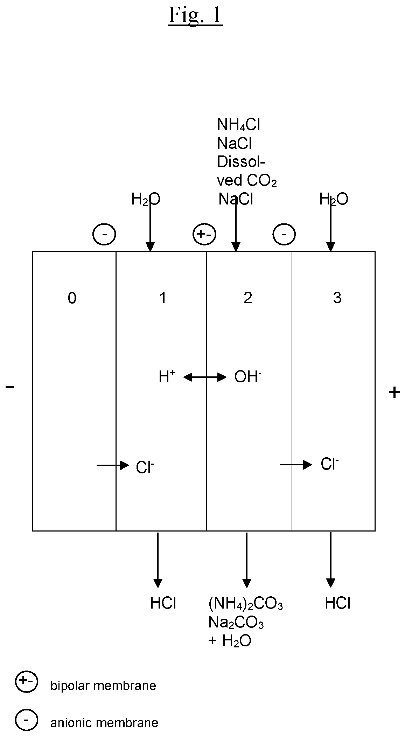

Figure 1 (Fig. 1) shows schematically the function of the electrodialyzer in one embodiment of the process of the present invention.

### Detailed description of the invention

Electrodialysis is a technique that consists in combining, within a set of adjoining chambers, different membranes types, such as: bipolar ion-exchange membranes, anionic ion-exchange membranes, and/or cationic ion-exchange membranes. The anionic membranes are ion-exchange membranes that are permeable to anions and, ideally, impermeable to cations. The cationic membranes are themselves permeable to cations and impermeable to anions.

A bipolar membrane is an ion-exchange membrane comprising a cationic face and an anionic face. Such membranes may be produced by joining a cationic membrane and an anionic membrane. The bipolar membrane may for example be produced by the process described in WO 01/79335 in the name of SOLVAY.

Within the bipolar membrane, under the action of a sufficient local electric field, the dissociation of the water that has penetrated therein to its H⁺ and OH⁻ions takes places, which ions then migrate on both sides of this membrane. There is therefore acidification in one of the chambers adjacent to the bipolar membrane and alkalization in the other adjacent chamber.

Successive bipolar membranes are separated by cationic or anionic monopolar membranes. When the electrodialyzer only possesses bipolar membranes and one type of monopolar membranes (cationic or anionic), they are said to have two (types of) chambers. The electrodialyzer used in the process of the present invention possesses preferably only bipolar and anionic membranes.

The chamber located between the anionic face of the bipolar membrane and the anionic membrane constitutes a base chamber. In this chamber there is a supply of OH⁻ ions originating from the bipolar membrane. In the process of the present invention the base chamber is fed with the solution containing ammonium chloride, sodium chloride and dissolved CO₂. The OH⁻ ions supplied from the bipolar membrane will react with the dissolved CO₂, present as solved carbon dioxide (H₂CO₃) or as bicarbonate ion (HCO₃⁻) and will form ammonium carbonate or sodium carbonate.

The pH in the base chamber is generally maintained within a desired range by controlling the flow rate of the feed solution and the current density applied to the electrodialyzer cellstack, which will induces the generation of OH-.

In the present invention, the pH of the outlet solution from the base chamber is at most 9.5, preferably at most 9.0. The pH of the outlet solution from the base chamber is generally at least 6.5, preferably at least 7.0.

The chamber located between the cationic face of the bipolar membrane and the anionic membrane constitutes an acid chamber. In this chamber, there is a supply of H⁺ ions originating from the bipolar membrane and Cl⁻ ions crossing the anionic membrane from the basic chamber fed with the aqueous solution comprising ammonium and sodium chloride.

The present invention relates also to a number of further embodiments of the process described hereafter, and combinable with any one of the other embodiment, isolated or in combination with several embodiments, unless obviously non-compatible.

In one embodiment, the electrodialyzer cellstack, used in the process of the present invention, comprises at least four chambers being separated from each other by alternating bipolar and anionic membranes. Preferably, each anionic membrane separates a base chamber from an acid chamber.

On an industrial scale it is, however, preferred that the electrodialyzer cellstack comprises a plurality of alternating base chambers and acid chambers being separated from each other by a plurality of alternating bipolar and anionic membranes. For example, a cellstack can be composed of a succession of acid and base chambers limited by successive anionic and bipolar membranes. In such construction, each anionic or bipolar membrane has one face in a base chamber and the other face in an acid chamber.

The electrodialysis cellstack is closed at both sides with electrolyte chambers, comprising electrode elements and degassing means. Said electrode elements are generally made of corrosive resistant materials, such as metals or metal oxides.

The concentration of ammonium and sodium chloride salts and dissolved carbon dioxide in the aqueous feed solution is not particularly limited. However, too diluted solutions leads to important energy consumption for recovering or concentrating the then generated ammonium carbonate or sodium carbonate.

Concentrated solutions may be suitable until they are not saturated in ammonium or sodium chlorides and or/ in ammonium and sodium bicarbonates or carbonates so that to avoid to be on the limit of the saturation of said salts.

Generally the aqueous solution fed in the base chamber comprises at most 6 mol NH₄⁺/ kg, at most 6 mol Cl⁻/ kg, and at most 3.5 mol Na⁺/ kg, and at most 3.5 mol / kg of dissolved CO₂, expressed by kg of the aqueous solution.

In the aqueous solution fed in the basic chamber, the chemical species concentrations should respect ions neutrality: i.e. the sum of the cation species equals the sum of the anion species expressed in equivalent electronic charges.

The aqueous feed solution comprises ammonium chloride and sodium chloride, dissolved CO₂, and may comprise other components such as ammonium bicarbonate, and/or sodium bicarbonate. The said aqueous feed solution is advantageously deriving from a filter solution, obtained from the separation of crude sodium bicarbonate crystals in their mother liquor, exiting a SOLVAY carbonation column.

In one embodiment, the aqueous solution comprising NH₄Cl, NaCl, dissolved CO₂ is the mother liquid obtained after sodium bicarbonate filtration (crude sodium bicarbonate) in a soda ash process. Optionally, the mother liquid is pre-treated to reduce or adjust volatile ammonia (NH₃) and carbon dioxide (CO₂) content.

In a further embodiment, the aqueous feed solution of the base chamber(s) may comprise advantageously a complement of dissolved CO₂ by injecting carbon dioxide in the mother liquor (ie carbonating the mother liquor).

In a further embodiment, the outlet solution from the base chamber comprising solved (NH₄)₂CO₃ and Na₂CO₃ is carbonated by injection of a CO₂ comprising gas to produce a carbonated liquor or a carbonated slurry, wherein at least part of the solved carbonate ions (CO₃²⁻) from the ammonium and sodium carbonate are transformed into bicarbonate ions (HCO₃⁻), and at least part of the carbonated liquor or slurry is recycled back into the base chamber.

The concentration of ammonium chloride in the aqueous feed solution of the invention, is not particularly limited. In a preferred embodiment the feed solution comprises at least 2 g/kg, such as at least 5 g/kg, preferably at least 10 g/kg, more preferably at least 50g/kg, even more preferably at least 100 g/kg, even more preferably at least 130 g/kg, and even more preferably at least 160 g/kg of ammonium chloride per kg of the feed solution.

The outlet solution from the base chamber comprises generally at most 5.0 mol. of total ammonia/ kg. Advantageously it comprises at most 2.0 mol of total ammonia/ kg, more advantageously at most 1.5, or even more advantageously at most 1.0 mol of total ammonia / kg of outlet solution. In such embodiments, the total free ammonia is advantageously at most 0.5 mol of free ammonia / kg of outlet solution, or even more advantageously at most 0.3 mol of free ammonia / kg of outlet solution.

In a further embodiment, the outlet solution from the base chamber comprising (NH₄)₂CO₃ and Na₂CO₃, is introduced into a soda ash process. Optionally, before introducing the outlet solution from the base chamber into a soda ash process, gaseous ammonia from the outlet liquid of the base chamber is recovered. Such recovery of ammonia may be made by heating and stripping.

In a further embodiment, of the above cited embodiments, the process comprises the further step of dissolving sodium chloride in the outlet solution of the base chamber to obtain an ammonia brine and introducing the thus obtained ammonia brine into the soda ash process.

The separation of crude sodium bicarbonate crystals from their mother liquor, when exiting a SOLVAY carbonation column, is operated generally on a rotary filter, or a band filter or a centrifuge. The said mother liquid comprises then ammonium chloride that has to be regenerated into ammonia to be recycled and use again in the ammonia - soda ash process.

The regeneration of at least part of the said ammonium chloride (NH₄Cl) into alkaline ammonia such as ammonium carbonate or as ammonium bicarbonate, may be then operated according to the present invention.

The concentration of the sodium chloride in the aqueous feed solution is not particularly limited. In a preferred embodiment, the aqueous feed solution may comprise at least 20 g/kg. The aqueous feed solution comprises generally at most 250 g/kg, preferably at most 100 g/kg sodium chloride.

The chamber located between the cationic face of the bipolar membrane and the anionic membrane constitutes an acid chamber. In this chamber there is a supply of H⁺ ions originating from the bipolar membrane and Cl⁻ ions crossing the anionic membrane. The acid chamber may for example be fed with water or diluted aqueous hydrochloric acid solution in which case the H⁺ ions and the Cl⁻ions supplied by the membranes form hydrochloric acid, which is obtained as an outlet liquid from the acid chamber.

In a further embodiment, the process of the present invention comprises recovering in a further step, an outlet liquid from the acid chamber containing hydrochloric acid.

The outlet liquid from the acid chamber may be partially recycled to the inlet of the acidic chamber. The remaining of this outlet liquid is taken out of the process, and corresponds to one co-production of the process of the present invention.

The thus produced hydrochloric acid may be used as such, or may be concentrated by removing at least part of its water content to produce a concentrated aqueous solution of hydrochloric acid. Concentration of up to 37.5% HCl or more, in weight, is advantageous for the transport of such concentrated acid.

The hydrochloric acid or the concentrated hydrochloric acid can also either be sold, used in other processes, or for example be reacted with calcium carbonate (limestone) to produce carbon dioxide. This is particularly advantageous, as the carbon dioxide gas obtained by such acid attack is of high concentration, such as at least 80% CO₂ in volume, or at least 90% CO₂ in volume or higher. This may be rendered possible by tightening air entries in used acid attack equipment. By comparison, conventional limekilns for calcining calcium carbonate produce CO₂ comprising gas at a concentration of about 40% in volume. In addition, such high CO₂ concentrations bring a high flexibility for the use of the associated CO₂ comprising gas, for its further use in a soda ash process. It also limits the size of the pipes for transporting such gas and reduces the power to compress said gas for injecting it in bicarbonation columns (to produce crude bicarbonate) or for injecting it in sodium bicarbonate crystallizers.

Therefore, in a further embodiment of the process of the present invention, the aqueous solution of hydrochloric acid from the acid chamber, or the concentrated aqueous solution of hydrochloric acid, is reacted with limestone, to obtain carbon dioxide (CO₂) and an aqueous solution of calcium chloride (CaCh). Optionally, in the above further embodiment, the present process comprises the further step of recycling at least partly the aqueous solution of calcium chloride (CaCl₂) to the acid chamber. The thus obtain carbon dioxide may be advantageously injected and dissolved in the aqueous solution feeding the base chamber. This is particularly advantageous, as it enables to ease the control of the pH at the outlet of the base chamber to at most 9.5, or at most 9.0.

The above obtained carbon dioxide (CO₂) can alternatively be injected and dissolved in at least part of the outlet solution from the base chamber (comprising (NH₄)₂CO₃ and Na₂CO₃) so that to form dissolved ammonium bicarbonate (NH₄HCO₃) or dissolved sodium bicarbonate (NaHCO₃), and recycling the thus obtained solution with the aqueous solution comprising NH₄Cl, NaCl, and dissolved CO₂ to feed the base chamber. This is particularly advantageous in a `feed and bleed' operation of the electrodialyzer.

The above obtained carbon dioxide (CO₂) can also be advantageously introduced into a soda ash process, optionally together with additional carbon dioxide from external sources, such as steam generators using carbonated combustibles, or such as carbon dioxide from other industries such as cement industry or glass industry.

The process of the present invention, relates then also to a process for producing sodium carbonate by a soda ash process, comprising the step of producing (NH₄)₂CO₃ and Na₂CO₃ according to one of the embodiments of the present invention or of its optional alternatives. Indeed the present invention has the advantage to regenerate the acidic form of ammonia such as ammonium chloride (NH₄Cl) into an alkaline ammonia: such as ammonium carbonate or ammonia bicarbonate. Such dissolved ammonium alkaline salts can be usefully recycled in brines upstream of the conventional soda ash process, to be able to absorb again acidic carbon dioxide in one of, or in all of, the different steps were CO₂ is used. Among such steps, it is advantageous to introduce the outlet solution from the base chamber, or a solution deriving from the outlet solution from the base chamber at the ammonia absorption step, or at the bicarbonation columns washing step, or at the crude sodium bicarbonate precipitation step.

In a further embodiment, the (NH₄)₂CO₃ and Na₂CO₃ from the base chamber outlet solution, or deriving from said base chamber outlet solution, is fed in a soda ash process before the ammonia (NH₃) absorption in NaCl brine, such as before stage 3 of Ullmann's Encycl. 2012, "Sodium carbonate" chapters reported above.

In a further embodiment, the (NH₄)₂CO₃ and Na₂CO₃ from the base chamber outlet solution, or deriving from said base chamber outlet solution, is fed in a soda ash process before the precipitation of crude sodium bicarbonate produced in a bicarbonation column (ie. `making column'), such as before stage 4 of Ullmann's Encycl. 2012, "Sodium carbonate" chapters reported above, or fed directly in a bicarbonation column. Alternatively to a bicarbonate column, they may be fed before (or into) a sodium bicarbonate crystallizer.

In the present invention, when part of the hydrochloric acid is concentrated and sold or when part is used in specific usages different than the acid attack of calcium carbonate that generates carbon dioxide, it is advantageous to complement the CO₂ sourcing for the production of soda ash or for the production of refined sodium bicarbonate, with CO₂ from other industries generating CO₂ gases, such as cement industry, glass industry, iron industry, or waste to energy industries burning carbon-containing combustibles (either fossil, or non fossil combustibles such as waste biomass), or from mineral or underground origin. Advantageously, the CO₂ sourcing can be originated from, or complemented with, CO₂ containing gases comprising a CO₂ capture step: such as from fumes, combustion gases, industrial gases, gas effluents, or even CO₂ captured from ambient air. Said gases may be used as such, or after re-concentration in CO₂, generally to reduce their inert and air content to reduce constraints for their transport and increase their absorption yields.

In an alternative, or in complement of the precedent described CO₂ sourcing, the recovery of CO₂ containing gases exiting soda ash process or exiting refined sodium bicarbonate process, such as fumes from steam generators, or from carbonation columns, constitutes an advantageous further embodiment. To ease its use in the production of soda ash or of refined sodium bicarbonate, the said CO₂ containing gas may also be re-concentrated in CO₂ before its use. Examples of techniques for such re-concentration are described in WO2016/102568 in the name of SOLVAY. Such CO₂ containing gases or re-concentrated CO₂ containing gasses may also be used for providing the dissolved CO₂ of the aqueous solution comprising NH₄Cl and NaCl that feeds the base chamber of the electrodialyzer cellstack of the present invention.

In either of any embodiments described above, the hydrochloric acid produced in the acid chamber may be reacted in totality or partially with limestone to obtain carbon dioxide. The said carbon dioxide may be then used for precipitating crude sodium bicarbonate crystals in a bicarbonation column; or alternatively said carbon dioxide may be then used for precipitating crude sodium bicarbonate in a sodium bicarbonate crystallizer.

The following examples are intended only to exemplify the invention and are not intended to limit the scope of the claimed invention.

### Example 1 - Non conform

The base chambers of an electrodialysis cellstack comprising bipolar membranes and anionic membranes were fed with the mother liquid obtained after sodium bicarbonate filtration from a soda ash plant comprising ammonium chloride, sodium chloride and dissolved CO₂. The liquid contained as dissolved species: 170 g/l of ammonium chloride, 70 g/l of sodium chloride, 60 g/l of ammonium bicarbonate, and 40 g/l sodium bicarbonate. The solution was diluted with deionized water to test different ammonium chloride concentrations reported in the following tables columns 2 & 3. The temperature in the electrodialysis cellstack was set to 50°C and several current densities of 0 to 1.5 kA/m² were applied. The pH of the base chamber was measured at the outlet of the chamber (ie representative of the pH in the chamber) and was maintained at the indicated strongly alkaline pH (10.5 and 13.0).

Ammonium ions leak from the base chamber (indicated as the quantity of ammonium mole-equivalent NH₄⁺ flow (or flux) and reported by surface unit of the corresponding membrane per unit of time expressed in hours, so expressed overall as mol eq NH₄⁺/ m².h, through the Anion exchange membrane (Anion permselective membrane) were measured by increase of ammonium concentration raise in respective acid chambers:
- through the anion exchange membrane (indicated as AEM) to the first acid chamber and
- through the bipolar membrane (indicated in the table as BPM membrane) and to the second acid chamber.

Some tests were carried out in a small cell to quantify loss of ammonia when pH is greater than 10. Results in next table shows than in some cases losses through anionic membrane can be controlled when a high current density is applied. This is not the case for losses of ammonia through the bipolar membrane.

### Example 2 -Conform to the invention

Example 1 was repeated in similar conditions but with a pH controlled 8.0 to 8.6 at the outlet of the base chamber.

Sensitively lower ammonia leaks(*) could be measured in a test of 10 hours, in comparable current density through each membranes, whatever the same current densities applied in the same range 0 - 1.5 kA/ m².
(*): the ammonia detection limit being 0.005 mol NH₃/ kg of solution. The tests were carried out two times (doubling the test) to check the reliability of the results.

One can see comparing Table 1 (non conform, with high pH between 10 to 14), that the leaks of ammonia (expressed as NH₄⁺ in mol equivalent h/ m²) are sensitively higher than the leaks of ammonia at pH lower than 9,5 (conform to the invention) from Table 2.

This shows one of the advantage of the present claimed invention to avoid and reduce sensitively ammonium ions leak through the membranes when controlling the pH of the base chamber to at most 9.5.

**Table 1 - Ammonium leak to acid chamber tests (Example 1 - Non conform to the invention)**

| | | | | CURRENT DENSITY | | | | | | | |
|---|---|---|---|---|---|---|---|---|---|---|---|
| Type of Membrane | Base Chamber | | | 0 kA/m² | | 0,5 kA/m² | | 1 kA/m² | | 1,5 kA/m² | |
| | [NH₄Cl] mol/ L | [NH₄Cl] mol/kg | pH | Flux BPM eq/m²h | Flux AEM eq/m²h | Flux BPM eq/m²h | Flux AEM eq/m²h | Flux BPM eq/m²h | Flux AEM eq/m²h | Flux BPM eq/m²h | Flux AEM eq/m²h |
| AEM | 2 | 1,73 | 13,6 | - | - | - | 0,22 | - | 0 | - | 0 |
| AEM | 4 | 3,37 | 10,8 | - | 1,25-1,05 | - | 0,9 | - | 0,71-0,38 | - | 0,41 |
| BPM | 2 | 1,73 | 13,6 | 0,30 | - | 0,50 | - | 0,49 | - | 0,32 | - |
| BPM | 4 | 3,37 | 10,8 | 1,16-0,85 | - | 0,92 | - | 0,71-0,49 | - | 0,49 | - |

**Table 2 - Ammonium leak to acid chamber tests (Example 2 - Conform to the invention)**

| Type of Membrane | Base chamber | | | CURRENT DENSITY (kA/m²) | | | | | | | |
|---|---|---|---|---|---|---|---|---|---|---|---|
| | [NH₄⁺] total | | pH | 0 kA/m² | | 0,5 kA/m² | | 1 kA/m² | | 1,5 kA/m² | |
| | mol/L mol/kg | | - | Flux BPM eq/m²h | Flux AEM eq/m²h | Flux BPM eq/m²h | Flux AEM eq/m²h | Flux BPM eq/m²h | Flux AEM eq/m²h | Flux BPM eq/m²h | Flux AEM eq/m²h |
| AEM | 0,57 | 0,52 | 8,5 | - | - | - | 0,00 | - | 0,00 | - | 0,00 |
| AEM | 1,08 | 0,99 | 8,5 | - | - | - | 0,00 | - | 0,00 | - | 0,00 |
| AEM | 1,9 | 1,71 | 8,4 | - | - | - | 0,00 | - | 0,00 | - | 0,00 |
| AEM | 2,5 | 2,27 | 8,2 | - | - | - | 0,30 | - | - | - | - |
| BPM | 0,57 | 0,52 | 8,5 | - | - | 0,00 | - | 0,00 | - | 0,00 | - |
| BPM | 1,08 | 0,99 | 8,5 | - | - | 0,00 | - | 0,00 | - | 0,00 | - |
| BPM | 1,9 | 1,71 | 8,4 | - | - | 0,00 | - | 0,00 | - | 0,00 | - |
| BPM | 2,33 | 2,12 | 8,4 | - | - | 0,00 | - | 0,21 | - | 0,00 | - |
| BPM | 2,5 | 2,27 | 8,2 | - | - | 0,73 | - | - | - | - | - |
| BPM | 3,94 | 3,55 | 8,2 | - | - | 0,00 | - | - | - | - | - |

## Claims

1. Process for producing (NH₄)₂CO₃ and Na₂CO₃ in an electrodialyzer cellstack by feeding a base chamber of the electrodialyzer cellstack with an aqueous solution comprising NH₄Cl, NaCl, dissolved CO₂ and obtaining an outlet solution from the base chamber comprising (NH₄)₂CO₃ and Na₂CO₃, and wherein the pH of the outlet solution from the base chamber is at most 9.5.

2. Process according to claim 1, wherein the pH of the outlet solution from the base chamber is at least 6.5, preferably at least 7.0.

3. Process according to claim 1 or 2, wherein the base chamber is bounded between one bipolar membrane and one anionic membrane.

4. Process according to one of the preceding claims, wherein the electrodialyzer cellstack comprises at least four chambers being separated from each other by alternating bipolar and anionic membranes.

5. Process according to the preceding claim, wherein each anionic membrane separates a base chamber from an acid chamber.

6. Process according to the preceding claim, comprising the further step of obtaining an outlet liquid containing an aqueous solution of hydrochloric acid from the acid chamber, and optionally concentrating the aqueous solution of hydrochloric acid by removing at least part of its water content to produce a concentrated aqueous solution of hydrochloric acid.

7. Process according to one of the preceding claims, wherein the aqueous solution comprising NH₄Cl, NaCl, dissolved CO₂ is the mother liquid obtained after sodium bicarbonate filtration in a soda ash process, wherein the mother liquid may optionally be pre-treated to reduce volatile ammonia (NH₃) and carbon dioxide (CO₂).

8. Process according to one of the preceding claims, wherein the outlet solution from the base chamber comprising solved (NH₄)₂CO₃ and Na₂CO₃ is carbonated by injection of a CO₂ comprising gas to produce a carbonated liquor or a carbonated slurry, wherein at least part of the solved carbonate ions (CO₃²⁻) from the ammonium and sodium carbonate are transformed into bicarbonate ions (HCO₃⁻), and at least part of the carbonated liquor or slurry is recycled back into the base chamber.

9. Process according to one of the preceding claims, comprising the further step of introducing the outlet solution from the base chamber comprising (NH₄)₂CO₃ and Na₂CO₃, into a soda ash process, optionally after recovering gaseous ammonia from the outlet liquid of the base chamber.

10. Process according to any of claims 7 to 9, comprising the further step of dissolving sodium chloride in the outlet solution of the base chamber to obtain an ammonia brine and introducing the thus obtained ammonia brine into the soda ash process.

11. Process according to any of claims 5 to 10, comprising the further step of reacting the aqueous solution of hydrochloric acid from the acid chamber, or the concentrated aqueous solution of hydrochloric acid, with limestone, to obtain: carbon dioxide (CO₂) and an aqueous solution of calcium chloride (CaCh).

12. Process according to the preceding claim, comprising the further step of recycling at least partly the aqueous solution of calcium chloride (CaCh) to the acid chamber.

13. Process according to claim 10, wherein the carbon dioxide is introduced into a soda ash process, optionally together with additional carbon dioxide from external sources.

14. Process for producing sodium carbonate by a soda ash process, comprising the step of producing (NH₄)₂CO₃ and Na₂CO₃, according to any of the claims 1 to 13.

15. Process according to any of claims 6 to 14, wherein the hydrochloric acid produced in the acid chamber is reacted with limestone to obtain carbon dioxide.
